Europäisches Patentamt

European Patent Office

Office européen des brevets

(11) Veröffentlichungsnummer: **0 456 989 A2**

# EUROPÄISCHE PATENTANMELDUNG

(21) Anmeldenummer: **91104143.2**

(22) Anmeldetag: **18.03.91**

(51) Int. Cl.5: **G01G 7/04**, G01G 23/16

(30) Priorität: **17.05.90 CH 1670/90**

(43) Veröffentlichungstag der Anmeldung:
**21.11.91 Patentblatt 91/47**

(84) Benannte Vertragsstaaten:
**DE FR GB**

(71) Anmelder: **Mettler-Toledo AG**
**Im Langacher**
**CH-8606 Greifensee(CH)**

(72) Erfinder: **Heusser, Martin**
**In der Au 57**
**CH-8706 Meilen(CH)**

(54) **Verfahren zur Funktionsfehlererkennung bei einer elektromagnetisch kraftkompensierenden Waage.**

(57) Beim Wägen wird jeweils während eines ersten Wägevorganges ein Zusatzstrom (Ia) zugeschaltet und danach der resultierende Gewichtswert mit einem Sollwert verglichen und gespeichert. Bei einem zweiten Wägevorgang wird der Zusatzstrom wieder abgeschaltet und der angezeigte Wert "Null" mit demjenigen vor dem ersten Wägevorgang verglichen.

FIG 4

Gegenstand der vorliegenden Erfindung ist ein Verfahren zur Funktionsfehlererkennung bei einer elektromagnetisch kraftkompensierenden Waage.

Bei hochauflösenden elektrischen Waagen ist es nur bedingt möglich, unrichtige Anzeigen des aufgelegten Gewichtes zu erkennen. Insbesondere ist dies praktisch unmöglich, wenn es sich um sehr geringe Abweichungen vom exakten Wert handelt. Es sind daher schon verschiedene Massnahmen zur Funktionsfehlererkennung, kurz FFE, vorgeschlagen worden.

Es ist bekannt, zur Funktionsfehlererkennung eine Komponentenverdoppelung anzuwenden, d.h. gewisse elektronische Bauteile oder Schaltungsgruppen parallel anzuordnen, um das jeweilige (Zwischen- oder End-) Resultat parallel auf zwei Wegen zu ermitteln. Bei Übereinstimmung der Ergebnisse ist davon auszugehen, dass die Waage richtig arbeitet. Eine Verdoppelung der für die Errechnung des Wägeresultates zuständigen Komponenten ist einerseits mit zusätzlichen Kosten und andererseits mit einem erhöhten Raumbedarf verbunden. Beides ist unerwünscht.

Aus der DE-A1-30 07 799 ist eine digital anzeigende Waage bekannt, welche eine Einrichtung zum Zählen der Taktimpulse während der Restzeit der vorgegebenen zeitlichen Intervalle und eine Einrichtung zum Vergleich der Summe der während der Restzeit und während der Messzeit gezählten Taktimpulse mit der den ganzen zeitlichen Intervallen entsprechenden Taktimpulssumme enthält.

Mit dieser bekannten Waage wird insbesondere die Funktion der Zähler der Taktimpulse überprüft. Die übrigen für die Gewichtsermittlung und/oder -anzeige wichtigen Bauteile werden nicht erfasst.

Bei einer weiteren bekannten Vorrichtung (EP-A1-0 143 169) wird eine Anordnung vorgeschlagen, welche eine Anordnung zur selbsttätigen Ueberwachung der Konstantstromquelle für das Permanentmagnetsystem enthält. Die Anordnung enthält eine erste Schaltung zur Erzeugung und Digitalisierung eines zum Konstantstrom in einem vorbestimmten Verhältnis stehenden Stromes sowie eine zweite Schaltung, welche den digitalisierten Wert mit einem Referenzwert vergleicht und gegebenenfalls eine Fehlermeldung auslöst.

In der DE-A1-35 15 969 wird zur Funktionsfehlererkennung eine Methode vorgeschlagen, welche eine permanente Ueberwachung der Konstantstromquelle und allenfalls weiterer Komponenten der Schaltung ermöglicht. Hierzu wird unter Verwendung eines separaten Analog-/Digitalwandlers der Konstantstrom und gegebenenfalls auch der Strom eines Temperaturfühlers periodisch digitalisiert und das Ergebnis in einem Mikroprozessor durch entsprechende Vergleichsmessungen überprüft. Diese Vergleichsmessung ist nur korrekt, wenn der A/D-Wandler eine der Waage entsprechende Auflösung aufweist. Dies bedingt einen hohen technischen Aufwand.

In allen Vorrichtungen gemäss den oben genannten Schriften werden die Spulen nicht in die Prüfung einbezogen und stellen damit eine unkontrollierbare Fehlerquelle dar.

Der vorliegenden Erfindung liegt die Aufgabe zugrunde, eine Funktionsfehlererkennung zu schaffen, welche wesentlich am Ergebnis beteiligte Elemente einschliesslich der Kompensationsspulen permanent überprüft.

Erfindungsgemäss wird diese Aufgabe dadurch gelöst, dass ein Zusatzstrom während eines ersten Wägevorganges zu- und während eines zweiten Wägevorganges wieder weggeschaltet wird.

Es gelingt mit dem erfindungsgemässen Verfahren, mit geringem Aufwand kontinuierlich und ohne Unterbrechung des Wägevorganges und nicht feststellbar durch die Bedienungsperson, die Waage zu überprüfen. Es können damit insbesondere auch Förderbandwaagen während des Betriebes dauernd überprüft werden.

Anhand eines illustrierten Ausführungsbeispieles wird die Erfindung näher erläutert. Es zeigen:

Figur 1      einen Ausschnitt aus einer elektronischen Schaltung eines Pulsbreitenmesssystems,

Figur 2      eine graphische Darstellung der Gewichtsanzeige während zweier Wägungen,

Figur 3      eine graphische Darstellung des durch den Zusatzstrom erzeugten Gewichtssignales,

Figur 4      eine graphische Darstellung des vom Messystem erzeugten Gewichtssignales,

Figur 5      eine graphische Darstellung des angezeigten Gewichtes,

Figur 6      eine graphische Darstellung der Gewichtsanzeige während zweier Wägungen,

Figur 7      eine graphische Darstellung des durch den Zusatzstrom erzeugten Gewichtssignales,

Figur 8      eine graphische Darstellung des vom Messystem erzeugten Gewichtssignales,

Figur 9      eine graphische Darstellung des angezeigten Gewichtes.

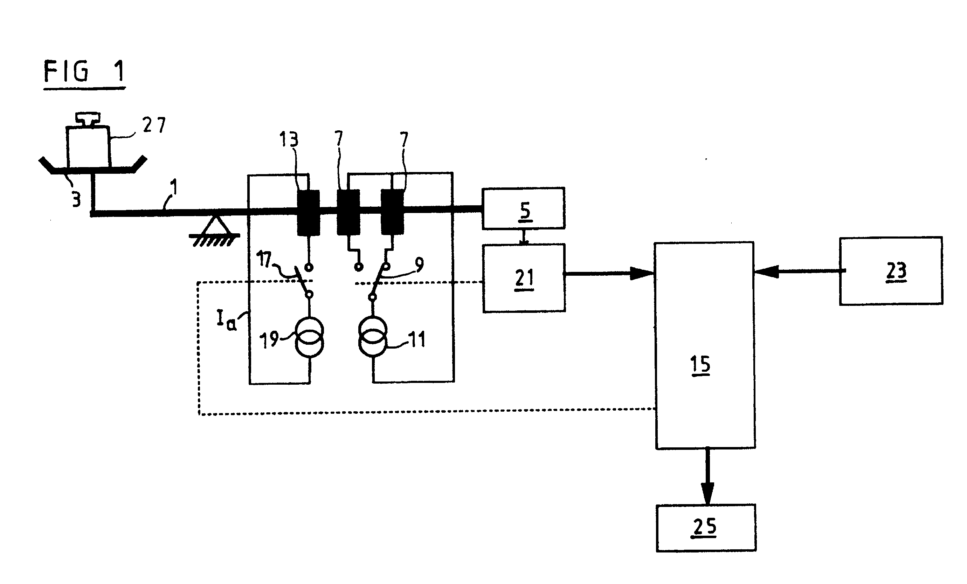

In der Figur 1 sind schematisch einige für das Verständnis der vorliegenden Erfindung notwendige Teile der heutigen Schaltung eines Pulsbreiten-Messsystems und der Waagbalken 1 mit einer Waagschale 3 und einem Positionsdetektor 5 schematisch dargestellt. Im Messystem sind dies die zwei Kompensationsspulen 7, ein Schalter 9 sowie die Stromquelle 11. Eine Waage dieser Art ist beispielsweise in der US-PS 4,245,711 ausführlich beschrieben. Eine Zusatzspule 13 ist über einen vom Mikroprozessor 15 der Waage kontrollierten Schalter 17 mit einer Zusatzstromquelle 19 für einen Zusatzstrom Ia mit eigener Referenz verbunden. Der Schalter 9 wird von einer A/D-Wandlerschaltung 21 gesteuert, die mit dem Mikroprozessor 15 verbunden ist. Der Positionsdetektor 5 leitet die am Waagbalken 1 abgetastete Lage des letzteren direkt an den A/D-Wandler 21 weiter. Aus einem EAROM-Speicher 23 entnimmt der Prozessor 15 die Sollwerte und in einer Anzeige 25 wird der tatsächliche Wert des aufgelegten Wägegutes 27 angezeigt.

Der Wert des Zusatzstromes Ia wird bei einer normalen Kalibrierung der Waage mit einem Kalibriergewicht gemessen und zur späteren Kontrolle z.B. in EAROM 23 in der Waagenelektronik aufbewahrt.

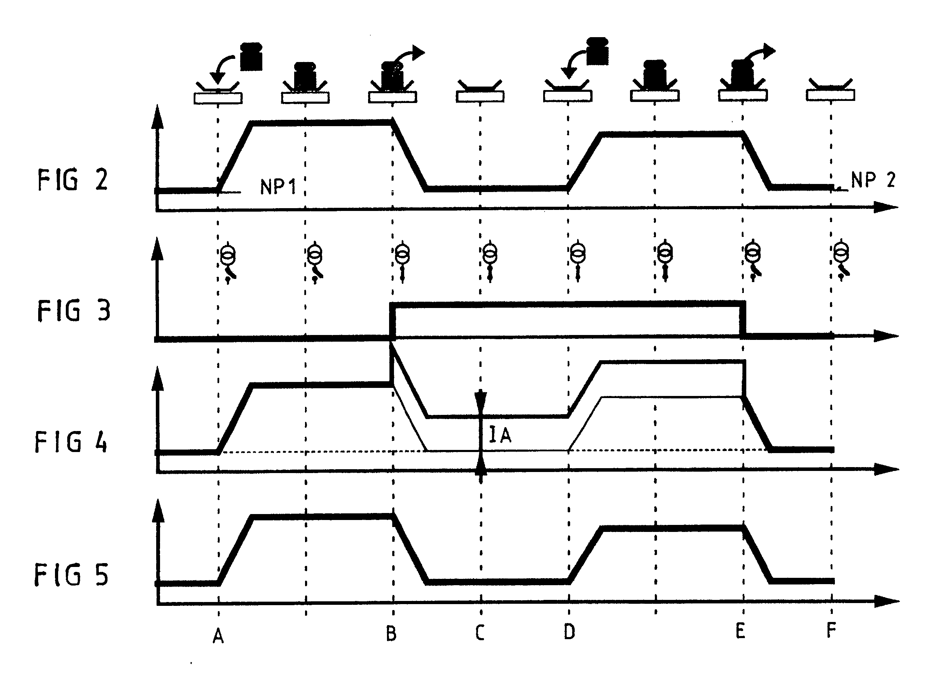

Beispiel 1 (Figuren 2 bis 5)

Erfindungsgemäss wird nun vorgeschlagen, den Zusatzstrom Ia beim Entlasten, d.h. beim Abheben des Wägegutes 27 zuzuschalten. Die zusätzliche Last durch den Zusatzstrom Ia wird softwareseitig bei der Gewichtsanzeige 25 entsprechend berücksichtigt, d.h. der im EAROM 23 gespeicherte Wert wird abgezogen. Im Einzelnen laufen die Schritte gemäss den graphischen Darstellungen in den Figuren 2 bis 5 ab:

In Figur 1 wird softwaremässig der erste Nullpunkt NP1 der unbelasteten und stillstehenden Waage erfasst und gespeichert (Schritt 1). Driftet die Waage weg, so wird der Wert "Null" an der Stelle A nochmals neu gespeichert.

Nun wird durch den Benutzer ein Wägegut 27 aufgelegt, und die Waage erfasst dessen Gewicht (Schritt 2). Das Gewichtssignal gemäss Figur 4 und die Gewichtsanzeige gemäss den Figuren 2 und 5 sind deckungsgleich.

Sobald der Benutzer das Wägegut 27 abzuheben beginnt (Stelle B), d.h. die Waage entlastet, wird dies durch die Waageelektronik festgestellt und gleichzeitig der Zusatzstrom Ia eingeschaltet (Schritt 3).

Nachdem das Wägegut 27 vollständig abgehoben und die Waage wägegutseitig unbelastet ist und stillsteht (Stelle C), wird der vom Zusatzstrom Ia erzeugte Gewichtswert erfasst und mit dem im EAROM 23 gespeicherten Sollwert der Stromreferenz verglichen (Schritt 4). Das Resultat des Vergleichs wird gespeichert. Nach dem Abheben des Wägegutes 27 und dem Einschalten des Zusatzstromes Ia stimmt das durch das Einschalten des Zusatzstromes erzeugte Gewichtssignal nicht mehr mit dem angezeigten überein. Durch die Subtraktion des durch den Zusatzstrom Ia erzeugten Gewichtes wird die Anzeige gemäss Figur 5 jedoch wieder gleich derjenigen ohne Zusatzstrom (Fig. 2).

Legt nun der Benutzer wieder ein Wägegut auf (Stelle D), so ermittelt die Waage dessen Gewicht und zeigt es an (Schritt 5). Analog zum vorangegangenen Schritt 4 bewegt sich das angezeigte Gewichtssignal parallel zu dem vom Messystem erzeugten.

Beim Abheben des Gewichtes (Stelle E) stellt dies die Waage fest und schaltet sofort den Zusatzstrom Ia (Schritt 6) aus und das vom Messystem erzeugte und das angezeigte Gewicht stimmen wieder überein.

Sobald die Waage sowohl bezüglich des Wägegutes 27 als auch des Zusatzstromes Ia unbelastet ist und stillsteht (Stelle F), wird der nun angezeigte Wert "Null" mit demjenigen vor dem Auflegen des ersten Wägegutes 27 verglichen (Schritt 7).

Stimmen die beiden Null-Werte (NP1 und NP2) innerhalb eines vorgesehenen Toleranzbereiches überein, so kann das in Schritt 4 errechnete Resultat als richtig betrachtet werden. Bei der folgenden Wägung, d.h. der dritten, beginnt das Prüfprogramm wieder bei Schritt 1 an der Stelle A.

Zur Vermeidung von Fehlentscheidungen der Waage wird der in Schritt 4 erfasste Messwert einer Plausibilitätsprüfung unterzogen. Die Bedienungsperson merkt von diesem dauernd mitlaufenden Prüfprogramm nichts, und es wird damit auch keine Verlangsamung des Wägeablaufes verursacht.

Die Nullpunktwerte NP1 und NP2 werden vom Mikroprozessor für eine Langzeitauswertung gespeichert. Bei einer Abweichung, welche einen vorgegebenen Sollwert übersteigt, erfolgt eine Fehlermeldung.

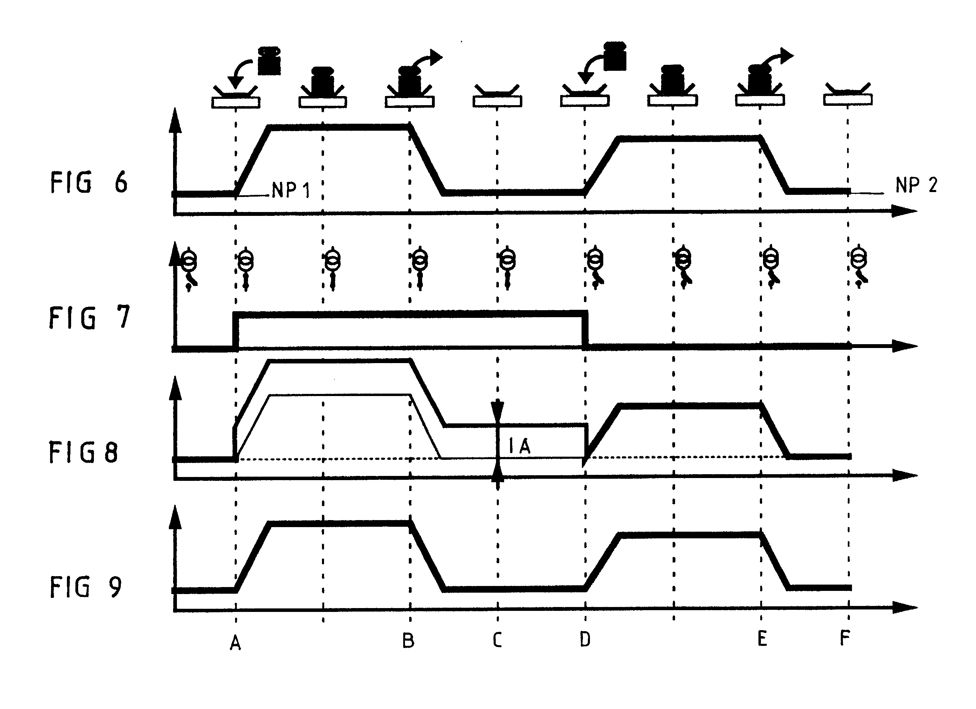

Beispiel 2 (Figuren 6 bis 9)

Erfindungsgemäss wird bei diesem Beispiel vorgeschlagen, den Zusatzstrom Ia nicht beim Abheben des Wägegutes 27 zuzuschalten, sondern gleichzeitig mit dem Auflegen des Wägegutes (Stelle A). Durch diese Massnahme unterscheiden sich das vom Messytem erzeugte Gewichtssignal bei aufgelegtem Gewicht von demjenigen des angezeigten Gewichtssignales um den Betrag Ia. Der Zusatzstrom Ia bleibt auch während des Abhebens des Wägegutes zugeschaltet und wird erst wieder weggeschaltet, wenn ein neues Wägegut auf die Waagschale aufgelegt wird (Stelle D). Danach decken sich das vom Messystem erzeugte Gewichtssignal und das angezeigte.

Im übrigen gelten sinngemäss die Ausführungen zu Beispiel 1.

**Patentansprüche**

1. Verfahren zur Funktionsfehlererkennung bei einer elektromagnetisch kraftkompensierenden Waage, dadurch gekennzeichnet, dass ein Zusatzstrom (la) während eines ersten Wägevorganges zu- und während eines zweiten Wägevorganges wieder weggeschaltet wird.

2. Verfahren nach Anspruch 1, dadurch gekennzeichnet, dass

a) der Nullpunkt (NP1) der Waage in unbelastetem Zustand erfasst und gespeichert wird,

b) ein erstes Wägegut (27) aufgelegt und dessen Gewicht erfasst und angezeigt wird,

c) beim Abheben des ersten Wägegutes (27) der Zusatzstrom (la) eingeschaltet wird und

d) nach dem Stillstand der Waage der resultierende Wert erfasst und mit dem gespeicherten Sollwert der Referenzkraft des Zusatzstromes (la) verglichen und gespeichert wird,

e) ein weiteres, neues Wägegut (27) aufgelegt und das zusätzliche Gewicht erfasst und angezeigt wird,

f) das zweite Wägegut (27) abgehoben und beim Abheben der Zusatzstrom (la) ausgeschaltet wird,

g) nach dem Stillstand der Waage der sich ergebende neue Nullpunkt (NP2) mit dem im Schritt a) erfassten ersten Nullpunkt (NP1) verglichen wird,

h) die Differenz des alten (NP1) und neuen Nullpunktes (NP2) mit einem Sollwert verglichen und

i) bei einem Wert innerhalb der Toleranz die Waage für weitere Wägungen freigegeben wird oder bei einem Wert ausserhalb der Toleranz eine Fehleranzeige erfolgt.

3. Verfahren nach Anspruch 1, dadurch gekennzeichnet dass

a) der Nullpunkt der Waage in unbelastetem Zustand erfasst und gespeichert wird,

b) ein erstes Wägegut (27) aufgelegt und gleichzeitig der Zusatzstrom (la) zugeschaltet wird und das vom Messsystem erzeugte Gewichtssignal erfasst und um den Referenzwert des Zusatzstromes (la) reduziert angezeigt wird,

c) der resultierende Wert nach dem Abheben des Wägegutes erfasst und mit dem gespeicherten Sollwert der Referenzkraft des Zusatzstromes (la) vergleichen und gespeichert wird,

d) ein weiteres neues Wägegut (27) aufgelegt und gleichzeitig der Zusatzstrom (la) ausgeschaltet wird,

e) das Gewicht erfasst und angezeigt wird,

f) das Wägegut (27) abgehoben und nach dem Stillstand der Waage der sich ergebende neue Nullpunkt (NP2) mit dem im Schritt a) erfassten ersten Nullpunkt (NP1) verglichen wird,

g) die Differenz des alten (NP1) und neuen Nullpunktes (NP2) mit einem Sollwert verglichen und

h) bei einem Wert innerhalb der Toleranz die Waage für weitere Wägungen freigegeben wird oder bei einem Wert ausserhalb der Toleranz eine Fehleranzeige erfolgt.

4. Verfahren nach Anspruch 2 oder Anspruch 3, dadurch gekennzeichnet, dass die Werte des Nullpunktes (NP1) und des Nullpunktes (NP2) statistisch erfasst werden.

FIG 1

EP 0 456 989 A2

FIG 2

FIG 3

FIG 4

FIG 5

FIG 6

NP 1

NP 2

FIG 7

FIG 8

I A

FIG 9

A       B       C       D       E       F

EP 0 456 989 A2